(19) Europäisches Patentamt / European Patent Office / Office européen des brevets

(11) **EP 2 012 101 B1**

(12) **FASCICULE DE BREVET EUROPEEN**

(45) Date de publication et mention
de la délivrance du brevet:
**09.12.2009 Bulletin 2009/50**

(51) Int Cl.:
*G01J 5/22* (2006.01)     *H04N 5/33* (2006.01)

(21) Numéro de dépôt: **08305274.6**

(22) Date de dépôt: **17.06.2008**

(54) **Dispositif de détection de rayonnement électromagnétique, en particulier infrarouge**

Vorrichtung zur Detektion von elektromagnetischer Strahlung, insbesondere von Infrarotstrahlung

Device for detecting electromagnetic radiation, in particular infrared

(84) Etats contractants désignés:
**DE FR GB IT SE**

(30) Priorité: **02.07.2007 FR 0756217**

(43) Date de publication de la demande:
**07.01.2009 Bulletin 2009/02**

(73) Titulaire: **ULIS**
**38113 Veurey Voroize (FR)**

(72) Inventeurs:
• **Dupont, Benoît**
**38000, GRENOBLE (FR)**
• **Vilain, Michel**
**38450, SAINT GEORGES DE COMMIERS (FR)**

(74) Mandataire: **Vuillermoz, Bruno**
**Cabinet Laurent & Charras**
**B.P. 32**
**20, rue Louis Chirpaz**
**69134 Ecully Cédex (FR)**

(56) Documents cités:
**US-A- 5 952 659**

• **TROUILLEAU C ET AL: "35 mu m pitch at ULIS, a breakthrough" PROCEEDINGS OF THE SPIE, SPIE, BELLINGHAM, VA, US, vol. 5873, no. pt II, 2005, pages 578-585, XP007904056 ISSN: 0277-786X**

**Description**

## DOMAINE DE L'INVENTION

La présente invention concerne un dispositif de détection de rayonnement électromagnétique, et notamment infrarouge mettant en oeuvre des détecteurs bolométriques. Elle trouve notamment son domaine d'application dans l'imagerie infrarouge.

## ETAT ANTERIEUR DE LA TECHNIQUE

Dans le domaine des détecteurs infrarouges, il est connu d'utiliser des dispositifs agencés sous forme matricielle, et susceptibles de fonctionner à température ambiante, c'est-à-dire ne nécessitant pas de refroidissement à de très basses températures, contrairement aux dispositifs de détection appelés « détecteurs quantiques » qui eux, nécessitent un fonctionnement à très basse température, typiquement celle de l'azote liquide.

Ces détecteurs non refroidis utilisent traditionnellement la variation d'une grandeur physique d'un matériau approprié, en fonction de la température, au voisinage de 300K. Dans le cas des détecteurs bolométriques, cette grandeur physique est la résistivité électrique.

Un tel détecteur non refroidi associe généralement :

- des moyens d'absorption du rayonnement infrarouge et de conversion de celui-ci en chaleur;
- des moyens d'isolation thermique du détecteur, de telle sorte à permettre à celui-ci de s'échauffer sous l'action du rayonnement infrarouge à détecter;
- des moyens de thermométrie qui, dans le cadre d'un détecteur bolométrique, mettent en oeuvre un élément résistif ;
- et des moyens de lecture des signaux électriques fournis par les moyens de thermométrie.

Les détecteurs destinés à l'imagerie infrarouge sont classiquement réalisés sous la forme d'une matrice de détecteurs élémentaires selon une ou deux dimensions, ladite matrice étant formée de manière dite "monolithique" ou reportée sur un substrat généralement réalisé en silicium, dans lequel sont constitués des moyens d'adressage séquentiel des détecteurs élémentaires et des moyens d'excitation électrique et de pré-traitement des signaux électriques générés par ces détecteurs élémentaires. Ces moyens d'adressage séquentiel, d'excitation électrique et de pré-traitement sont donc formés sur le substrat et constituent un circuit de lecture. Le terme « lecture » exprime la formation d'un signal électrique à partir de l'état des éléments sensibles.

Pour obtenir une scène par l'intermédiaire de ce détecteur, on projette la scène à travers une optique adaptée sur la matrice de détecteurs élémentaires, chacun d'entre eux constituant un point image ou pixel, et des stimuli électriques cadencés sont appliqués par l'intermédiaire du circuit de lecture à chacun des détecteurs élémentaires, ou à chaque rangée de tels détecteurs, afin d'obtenir un signal électrique constituant l'image de la température atteinte par chacun desdits détecteurs élémentaires. Ce signal est traité de manière plus ou moins élaborée par le circuit de lecture, puis éventuellement par un dispositif électronique extérieur au boîtier afin de générer l'image thermique de la scène observée.

La difficulté essentielle de mise en oeuvre des détecteurs bolométriques réside dans la très faible variation relative de leur résistance électrique, représentative des variations locales de température d'une scène observée, par rapport à la valeur moyenne de ces résistances.

La présence par construction d'une résistance thermique finie entre le bolomètre et le substrat implique que la température du bolomètre est influencée par la température du substrat, et ceci de manière beaucoup plus sensible que les variations de température dues au flux incident, qui seules sont à prendre en considération du point de vue du signal à détecter. Les fluctuations résiduelles de température du substrat, dans des conditions ordinaires de stabilisation thermique, *a fortiori* si le détecteur est exempt d'un tel système de stabilisation thermique, situation de plus en plus fréquente dans ce type de détecteurs afin d'en diminuer le coût, produisent en conséquence sur le signal issu du bolomètre une composante inutile, qui nuit à la qualité du signal. Pour éviter ou au moins limiter cet effet, le substrat est traditionnellement régulé thermiquement.

De plus, des structures dites « de compensation » sont mises en oeuvre pour atténuer les effets de la température du plan focal sur la réponse du détecteur. Ces structures, usuellement des bolomètres dits « aveugles », c'est-à-dire insensibles au flux optique incident, mais sensibles à la température du substrat, sont utilisées pour générer un courant dit de compensation, qui est soustrait du courant issu des bolomètres d'imagerie, c'est à dire des bolomètres de détection, grâce à la configuration du circuit électronique.

Typiquement, ces structures de compensation sont construites de façon à présenter une résistance thermique très faible, et notamment négligeable par rapport au substrat, contrairement aux bolomètres d'imagerie.

De cette manière, l'essentiel du courant dit « de mode commun », c'est à dire non représentatif des informations provenant de la scène à détecter, est éliminé.

2

Par ailleurs et avantageusement, les structures de compensation étant essentiellement à la température du circuit de lecture, et donc du plan focal, on obtient directement une réjection notable des éventuelles fluctuations de température de ce dernier. Il est connu de disposer ces structures de compensation « à l'identique » de manière répétitive dans chaque colonne de la matrice, de manière à limiter la complexité et l'encombrement total du circuit.

Chaque colonne de bolomètres est séquentiellement compensée, lors du balayage électronique ligne par ligne de l'image, à l'aide d'une même structure de compensation. Les structures de compensation présentent cependant naturellement, une dispersion spatiale de résistance, liée aux procédés technologiques mis en oeuvre dans leur élaboration (qui relèvent habituellement de l'industrie du semi-conducteur).

En outre, les bolomètres aveugles, tout comme les bolomètres d'imagerie, ainsi que certaines fonctions du circuit de lecture, présentent des phénomènes de bruit en général, et de bruit dit « en 1/f » en particulier. Le bruit en 1/f est typiquement la source d'une dérive basse fréquence, et particulièrement très basse fréquence, du niveau de sortie des capteurs, qui nuit à la qualité de l'imageur. Il résulte de la disposition par colonne de la compensation, un impact négatif sur la qualité de l'image, à cause des variations basse fréquence, asynchrones entre colonnes, du signal compensé. Outre les éventuelles dispositions de conception et de mise en oeuvre particulières déployées pour réduire cette dispersion, des algorithmes de compensation doivent en général être développés et appliqués en sortie d'imageur afin d'améliorer la qualité d'image.

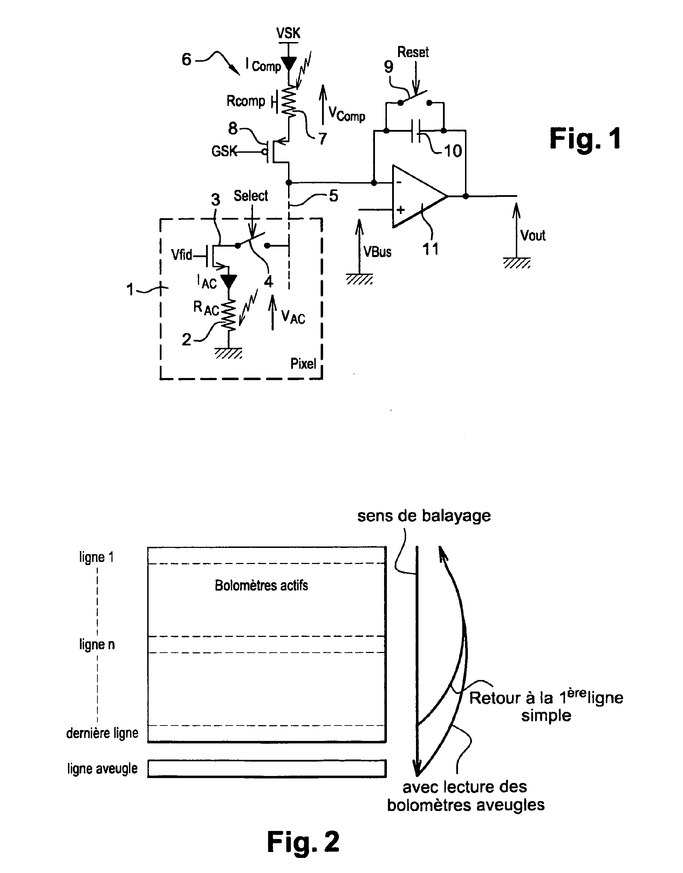

Ainsi, pour former un échantillon d'image (une trame), tous les bolomètres de la première ligne sont adressés (polarisés) simultanément, et leur courant est compensé à l'aide de la structure de compensation aveugle disposée en extrémité de colonne. Le signal « ligne » obtenu est traité et transféré en sortie pendant que la seconde ligne est adressée, le processus est reconduit jusqu'à la dernière ligne pour complétion de la trame, puis recommencé à l'identique pour la trame suivante (voir schéma de la figure 2). On comprend que les variations basse fréquence du courant de compensation, qui s'exerce au premier ordre de la même manière sur tous les éléments de chaque colonne, mais de manière différente d'une colonne à l'autre, produit un léger contraste colonnaire, et lentement variable, qui nuit à la qualité de l'image. Outre les efforts de design et de technologie mis en oeuvre pour réduire les dispersions fixes et le bruit basse fréquence, des algorithmes de compensation doivent être développés et mis en oeuvre pour amener ces effets à un niveau minimal.

Les composants d'imagerie récents font appel à des processus de correction algorithmique des dérives résiduelles du signal de sortie liées aux fluctuations de température du plan focal. Cette approche vise la suppression des dispositifs de régulation thermique (modules dits « thermoélectriques » à effet Peltier), coûteux au niveau du composant lui-même, et des moyens de mise en oeuvre associés. Ces composants simplifiés sont communément dénommés « TECless » selon la terminologie anglo-saxonne (TEC : *« ThermoElectric Cooler »*). L'efficacité de ces processus dépend de manière importante de l'évaluation correcte et précise de la dispersion de ces structures de compensation sur la plage de variation de température du plan focal qu'on entend autoriser pour l'application envisagée.

Les circuits de lecture pour capteurs à bolomètres résistifs exploitant des bolomètres aveugles ont été décrits, par exemple dans les publications suivantes :

- *« Uncooled amorphous silicon technology enhancement for 25 $\mu$m pixel pitch achievement »*, E. MOTTIN et al ; Infrared Technology and Applications XXVIII, SPIE Vol. 4820 ;
- *"*320 x 240 uncooled microbolometer 2D array for radiometric and process control applications" B. FIEQUE et al; Optical Systems Design Conference, SPIE 5251, Sept 29 ;
- *"*Low cost amorphous silicon based 160 x 120 uncooled microbolometer 2D array for high volume applications" C. TROUILLEAU et al; Optical Systems Design Conference SPIE 5251-16.

Les structures électroniques décrites dans cet état antérieur de la technique sont conçues dans l'objet premier de lire les bolomètres de la matrice active, mais permettent en outre de lire les bolomètres aveugles moyennant une adaptation des chronogrammes de lecture. Ces deux cas sont très schématiquement illustrés sur la figure 2.

Le principe de lecture d'une matrice active de bolomètres est maintenant explicité en relation avec la figure 1.

Le pixel **1** (le terme « pixel » doit s'entendre par extension comme l'ensemble des structures disposées dans l'emprise d'un point élémentaire de détection) comporte un bolomètre actif **2**, un transistor NMOS d'injection **3** et un interrupteur **4** reliant le pixel **1** à la colonne de lecture **5**, représentée ici en pointillé. La structure de compensation **6**, également dénommée d'ébasage, selon une autre terminologie du domaine technique considéré, comporte un bolomètre aveugle **7** relié à une alimentation VSK et un transistor PMOS d'injection **8**. En mode de fonctionnement nominal, le PMOS fonctionne en régime saturé. Son courant $I_{comp}$ est défini par l'expression :

$$Icomp = \frac{Vcomp}{Rcomp}$$

expression dans laquelle :

- Vcomp désigne la tension aux bornes du bolomètre de compensation **7 ;**
- Rcomp désigne la résistance dudit bolomètre de compensation.

S'agissant de la branche active où le courant circulant dans le transistor NMOS d'injection **3** exprime par la relation :

$$Iac = \frac{Vac}{Rac}$$

dans laquelle :

- Iac désigne le courant de la branche active;
- Vac désigne la tension aux bornes du bolomètre actif **2 ;**
- Rac désigne la résistance dudit bolomètre actif.

Les tensions de polarisation des transistors MOS d'injection sont choisies pour qu'en l'absence de flux de scène incident, c'est à dire par exemple lorsque l'on obture optiquement le système, la différence de courant $dI = I_{comp} - I_{ac}$ entre la branche active et la branche aveugle soit sensiblement nulle.

Lorsque l'on souhaite lire un bolomètre actif, l'opération se déroule en deux phases. La première phase consiste à actionner l'interrupteur de remise à zéro « Reset » **9** court-circuitant la capacité d'intégration **10** de l'amplificateur opérationnel **11.** On a alors :

$$V_{out} = V_{BUS}$$

La colonne de lecture en pointillé **5** est donc portée au potentiel $V_{BUS}$. Ensuite on ouvre l'interrupteur « Reset » **9** et on ferme l'interrupteur de sélection « Select » **4** connectant le pixel **1** à la colonne de lecture **5.** La différence de courant dI est alors intégrée sur une capacité Cint **10** durant un temps d'intégration fini $T_{int}$. L'intégration produit un niveau de sortie en tension dit « Niveau Continu » ou **NC** dans le cas de référence où l'on observe une scène à température uniforme, qui révèle typiquement les dispersions de la matrice d'imagerie. C'est le mode de caractérisation standard de lecture des bolomètres actifs.

$$NC = VBus - \frac{T\,int}{C\,int} dI$$

La polarisation des bolomètres est choisie de telle sorte à assurer à la fois une bonne dynamique du signal de sortie et une compensation efficace.

Une expression plus rigoureuse serait obtenue en considérant pour le dernier terme l'intégrale sur Tint de la fonction dI(t), car les courants $I_{ac}$ et $I_{comp}$ ne sont pas constants. Cependant, pour la clarté de l'exposé, l'expression ci-dessus suffit à expliciter les paramètres à prendre en considération.

Ce système de lecture présente certaines limitations liées à la reproduction du motif de compensation par colonne sur le circuit de lecture. En effet chaque colonne dispose d'un bolomètre de compensation et de son transistor PMOS d'injection. La reproduction imparfaite de ces différents éléments d'une colonne sur l'autre, inhérente aux dispersions spatiales intrinsèques des technologies de construction mises en oeuvre, engendre une dispersion dans l'efficacité de la compensation. Ces dispersions statistiques se traduisent par un courant de compensation non uniforme d'une colonne à l'autre, faisant apparaître des contrastes colonnaires visibles, affectant ainsi le signal disponible.

Il est possible d'exploiter le circuit de lecture classique des bolomètres actifs pour lire les bolomètres aveugles de compensation. Pour cela, en fin de trame (c'est-à-dire après la lecture de la dernière ligne), on effectue la première phase de reset de la capacité. On a donc toujours :

$$V_{out} = V_{bus}$$

On relâche ensuite l'interrupteur « Reset » **9,** mais on laisse ouvert l'interrupteur « Select » **4,** afin de mesurer la valeur de la résistance du bolomètre aveugle 7 seul. On intègre donc durant un temps Tint sur la capacité Cint **10** l'intégralité du courant circulant dans la branche de compensation. Dans ce cas de figure, la tension de sortie Vout du système s'exprime comme suit :

$$Vout = Vbus - \frac{T\,\text{int}}{C\,\text{int}} \times Icomp = Vbus - \frac{T\,\text{int}}{C\,\text{int}} \cdot \frac{Vcomp}{Rcomp}$$

Le circuit de lecture classique permet donc d'accéder à la valeur de résistance des bolomètres aveugles, via la tension de sortie du système.

$$R_{comp} = \frac{C\,\text{int}}{T\,\text{int} \times Vcomp} \times \left(Vbus - Vout\right)$$

Ce type de circuit associé à cette mise en oeuvre particulière, offre l'avantage de donner accès directement, pour chaque trame, à la valeur de la résistance du bolomètre aveugle de compensation, et donc, fournit en principe les données nécessaires à l'algorithme de correction (suppression du phénomène de colonage de l'image). Cependant, il comporte certaines limitations.

Tout d'abord, le système intègre tout le courant de polarisation du bolomètre. Or, ce courant est typiquement de 20 à 50 fois plus grand que le courant normalement intégré lors de la lecture d'un bolomètre actif, en mode compensé standard. En conséquence, le temps d'intégration doit être diminué comparativement à la lecture d'une ligne de bolomètres actifs, afin d'éviter la saturation de la capacité d'intégration Cint bien avant la fin du temps d'intégration. Ceci complique la mise en oeuvre de la lecture du point de vue de la gestion temporelle des stimuli.

En outre, ce cycle perturbe thermiquement les bolomètres de compensation, (qui présentent typiquement une résistance thermique très faible, mais cependant non nulle), et donc leur résistance. En effet, lors de la lecture des lignes actives, les bolomètres de compensation sont polarisés de façon périodique (selon la fréquence ligne) pendant un espace de temps constant. L'effet joule, lié au passage du courant de compensation dans ces bolomètres, les porte à une température identique au début de chaque cycle d'intégration (pour chaque ligne), ou plus exactement, leur impose un profil thermique exactement répétitif lors de chaque cycle d'intégration, jusqu'à la lecture de la dernière ligne. Lorsqu'on lit ensuite la ligne de bolomètres aveugles de compensation, on vient perturber ce cycle puisque l'on doit appliquer un temps d'intégration Tint très nettement inférieur (d'un facteur 20 à 50 ainsi que précisé précédemment). Il en résulte une perturbation thermique temporaire qui induit un décalage de niveau continu, et donc devant une scène quelconque, une perturbation de l'image au début de la trame suivante.

Une perturbation de même origine survient également dans le cas où le balayage de la trame s'effectue sur une durée inférieure au temps de rafraîchissement d'image. Il apparaît un temps de latence, éventuellement important, entre lectures de trame successives, c'est à dire entre la fin d'une lecture de trame et le début de lecture de la trame suivante.

Ce problème peut, par exemple, être résolu à l'aide d'une complexification du circuit de lecture, destinée à maintenir la température des bolomètres de compensation essentiellement constante, ou à tout le moins, à maintenir la périodicité du profil temporel de température sur toutes les lignes de la trame. A cette fin, un courant de « préchauffe » ou de « substitution », proche du courant moyen traversant le bolomètre aveugle pendant le temps d'intégration, peut être injecté à l'aide d'un dispositif particulier, dans l'objectif de maintenir la température du bolomètre aveugle pendant les intervalles de temps hors périodes d'intégration. Ce dispositif est typiquement constitué d'une source additionnelle de courant fixe, complétée par un système de commutation répétitive avec la branche active, piloté de telle manière à éliminer les ruptures de période. Cette commutation de courant de substitution est activée entre deux lectures de lignes, ainsi que dans l'intervalle de temps entre la lecture de la dernière ligne (aveugle dans le cas présent) et la reprise de la première ligne de la trame suivante. La température, et donc aussi la résistance des bolomètres de compensation, est ainsi essentiellement constante au cours du temps : il n'y a plus d'effets thermiques transitoires perturbateurs.

Il se pose alors un problème lorsque la température du composant varie, en l'absence de dispositif de stabilisation de la température (cas de plus en plus courant). Classiquement, la plage nominale de fonctionnement des détecteurs peut se trouver fixée entre -40 °C et +120 °C. La source de courant de préchauffe est alors dimensionnée pour correspondre à un point de fonctionnement médian, par exemple 30°C. A cette température, le courant de substitution est ajusté pour être représentatif du courant moyen de la branche active. Cet ajustement devient inadéquat lorsque la température du plan focal s'éloigne beaucoup de ce point, et on retrouve au moins en partie les défauts de variations thermiques des bolomètres aveugles dans l'intervalle temporel de lecture entre une trame et la trame suivante. Ce problème est également résolu par l'invention décrite ci-dessous.

Une autre limitation, plus gênante, liée à ce couple circuit/mise en oeuvre, découle de sa pertinence par rapport à la correction logicielle (algorithmique) du colonage des images. En effet, le point pertinent au niveau algorithmique de correction, n'est pas la valeur absolue de la résistance du bolomètre aveugle, mais plutôt sa dispersion, c'est à dire sa distribution colonne à colonne. En effet, une dispersion exactement nulle n'induit aucun colonage, quelle que soit la valeur commune des résistances de compensation. De ce point de vue, le système de lecture des bolomètres aveugles selon l'état antérieur de la technique exposé précédemment est mal adapté à l'appréciation précise des écarts de résistances. On s'intéresse à la sensibilité de la tension de sortie en fonction d'une variation de résistance du bolomètre aveugle, donnée par la relation suivante :

$$\frac{\delta Vout}{\delta Rcomp} = \frac{T\text{int}}{C\text{int}} \times \frac{Vcomp}{Rcomp^2}$$

Compte tenu des valeurs de résistances de bolomètres aveugles, et de la limitation sur le temps d'intégration précédemment discutée, la valeur de la sensibilité ainsi définie est relativement faible. Ainsi, à titre d'exemple numérique, on a :

- Cint = 6pF
- Tint = 3 $\mu$s
- Vcomp =3 V
- Rcomp = 1.6 MΩ
- dynamique de sortie = 3 V

$$\frac{\delta Vout}{\delta Rcomp} = 586e-9V \, / \, \Omega$$

Le gain (terme équivalent de la sensibilité) de la structure est relativement faible, et le signal utile est d'autant plus difficile à exploiter (moins précis). Une variation de résistance de 3kΩ représente en effet 2 mV de signal utile. Pour l'homme du métier, en supposant un ADC (convertisseur Analogique - Digital) de 12 bits couvrant toute la dynamique (3V typiquement) du détecteur, le signal utile représente 2,7 LSB (selon l'expression anglo-saxonne « *least significant bit* »), soit moins de 2 bits réellement utilisables, ce qui est typiquement très insuffisant pour alimenter une algorithmie de correction efficace.

L'invention propose une méthode d'évaluation précise de la dispersion (distribution) de la résistance de ces bolomètres de compensation et de leur dérive éventuelle dans le temps. L'intérêt principal est de fournir aux développeurs d'algorithmes des données plus fines que celles fournies par les techniques relevant de l'état antérieur de la technique, et en conséquence, d'offrir une qualité d'image corrigée améliorée.

## EXPOSE DE L'INVENTION

Ce dispositif de détection de rayonnement électromagnétique, et notamment infrarouge comprend une matrice de bolomètres élémentaires sensibles au rayonnement incident, dit « actifs » et une ligne additionnelle de bolomètres (12) essentiellement insensibles audit rayonnement, dits «aveugles », lesdits bolomètres actifs et aveugles étant formés au dessus d'un substrat, dans lequel est réalisé un circuit de lecture à adressage séquentiel de chacune des lignes de la matrice et de la ligne de bolomètres aveugles, chacun des bolomètres d'une même ligne étant polarisé simultanément.

Selon l'invention :

■ le circuit de lecture comporte en outre une source de production d'un courant de référence ($I_{ref}$) à partir d'un bolomètre aveugle supplémentaire, également formé au dessus du substrat, et des moyens de copie dudit courant de référence ($I_{ref}$) dans chacune des colonnes de la matrice, constitués d'un miroir de courant ;

■ chacune des colonnes de la matrice comporte une structure de compensation destinée à dériver la majeure partie du courant électrique de fond ou courant de mode commun, comportant un bolomètre aveugle de ladite ligne additionnelle, associé à un intégrateur de courant, destiné à intégrer la différence entre le courant traversant le bolomètre actif de la ligne en cours de lecture et un courant de compensation émanant du bolomètre aveugle;

■ lors de la phase de formation du signal ou lecture de ladite ligne additionnelle, la copie du courant de référence ($I_{ref}$) est dérivée du courant émanant du bolomètre aveugle par le biais d'un interrupteur.

En d'autres termes, l'invention consiste à opérer une compensation des structures de compensation, lorsque l'interrupteur précité est fermé, c'est à dire lors de la phase de lecture des bolomètres de compensation, afin de permettre la détermination précise de la dispersion de la résistance des bolomètres aveugles constitutifs de ladite structure de compensation, outre de leur dérive éventuelle dans le temps, et ainsi permettre d'établir un algorithme approprié de traitement de la compensation.

Selon l'invention, la structure de compensation comporte :

■ un bolomètre dit de compensation, de résistance $R_{comp}$ ;

■ une ligne d'alimentation (VSK) connectée à l'une des bornes de ladite résistance $R_{comp}$ ;

■ un transistor d'injection, connecté d'une part, à l'autre borne de ladite résistance, de manière à imposer un courant de compensation ($I_{comp}$) à travers ladite résistance $R_{comp}$, via une tension (GSK) sur sa grille, et d'autre part, à la borne négative de l'intégrateur.

Selon l'invention, la source de production du courant de référence ($I_{ref}$) est constituée :

■ du bolomètre aveugle supplémentaire présentant une résistance $R_{comp\text{-}réf}$ ;

■ d'un transistor d'injection, connecté à l'une des bornes de ladite résistance $R_{comp\text{-}réf}$, et assurant la polarisation de ladite résistance ;

■ d'une ligne d'alimentation connectée à l'autre borne de ladite résistance $R_{comp\text{-}réf}$ ;

■ d'un miroir de courant, connecté à l'autre borne du transistor.

Selon l'invention, les bolomètres aveugles sont chacun constitués d'un ou plusieurs bolomètres aveugles élémentaires connectés ensemble, présentant globalement une résistance thermique négligeable par rapport au substrat.

Le miroir de courant mis en oeuvre comporte quant à lui :

■ un premier transistor de référence localisé près de la source de courant de référence ($I_{ref}$), dont la source est à la masse du système, et dont le drain et la grille sont connectés à la source du transistor d'injection de ladite source de courant de référence ;

■ un transistor de copie par colonne, dont la grille est commune (isopotentielle) à la grille dudit premier transistor de référence, dont la source est à la masse, et dont le drain est connecté à l'interrupteur connectant le système de lecture des bolomètres aveugles à l'entrée négative de l'intégrateur.

Les transistors constitutifs du miroir de courant peuvent être soit de type NMOS, soit de type PMOS.

La mise en oeuvre d'un tel miroir de courant engendre, de manière connue, un bruit parasite, que l'on peut souhaiter diminuer autant que faire se peut. A cette fin, l'invention propose, selon une version avantageuse, d'associer aux deux transistors constituant ledit miroir, un composant propre à induire une chute de tension ohmique, et notamment une résistance ou un transistor « long ».

L'expression transistor « long » est bien connue de l'homme du métier, et désigne un transistor, dont la longueur, c'est à dire la distance séparant le drain de la source est très supérieure à sa largeur.

En outre, la précision de recopie du miroir de courant peut être entachée de l'effet de dispersion inhérent aux transistors du miroir de courant. Afin de réduire cet effet, l'invention propose, selon une autre version avantageuse, de mettre en oeuvre un miroir dit « cascode », mettant deux transistors de même type en série, la source des transistors extrêmes étant à la masse.

Selon l'invention, l'interrupteur de connexion du courant de référence $I_{ref}$ à l'entrée de l'intégrateur est maintenu fermé lorsque tous les interrupteurs de sélection des pixels actifs sont ouverts. En d'autres termes, le dispositif comporte un circuit logique apte à maintenir fermé ledit interrupteur à tout instant pendant lequel aucune ligne n'est sélectionnée en lecture, c'est à dire lorsque tous les interrupteurs d'adressage ligne sont ouverts.

L'invention concerne également un système d'imagerie mettant en oeuvre un dispositif de détection infrarouge tel que précédemment décrit. Ce système intègre une algorithmie corrigeant les signaux de sortie de chaque ligne de chaque trame en fonction d'un signal « ligne » particulier, obtenu par la fermeture de l'interrupteur connectant ledit courant de référence $I_{ref}$ à l'entrée de l'intégrateur lors de la lecture de la ligne de bolomètres aveugles.

## BREVE DESCRIPTION DES FIGURES

La manière de réaliser l'invention et les avantages qui en découlent ressortiront mieux des exemples de réalisation qui suivent, donnés à titre indicatif et non limitatif à l'appui des figures annexées.

La figure 1 déjà décrite est une représentation schématique du principe de lecture d'une matrice active de bolomètres.

La figure 2 illustre le cycle de lecture d'une matrice de bolomètres munie d'une ligne de bolomètres aveugles, selon l'état antérieur de la technique.

La figure 3a représente un chronogramme de lecture des lignes actives d'une matrice de bolomètre, et la figure 3b, celui d'une ligne de bolomètre aveugle, également selon l'état antérieur de la technique.

La figure 4 est une représentation schématique analogue de la figure 1, mais illustrant le principe général de l'invention, et mettant en oeuvre des transistors de type NMOS au niveau du miroir de courant.

La figure 5 est une vue analogue à la figure 4, dans laquelle les transistors de type NMOS du miroir de courant ont été remplacés par des transistors de type PMOS.

La figure 6 est une représentation schématique d'une version plus évoluée de l'invention, pour une application dite « faible bruit », propre à réduire le bruit généré par le miroir de courant.

La figure 7 est une représentation schématique d'une version également plus évoluée de l'invention, pour une application dite « faible offset », propre à réduire les effets de dispersion inhérents au miroir de courant.

## DESCRIPTION DETAILLEE DE L'INVENTION

Dans la suite de la description, le même numéro de référence identifie des éléments identiques ou de même nature fonctionnelle lorsque cela peut s'appliquer.

De manière générale, et ainsi que déjà précisé, la matrice de détecteurs bolométriques est formée au dessus d'un substrat en silicium, dans lequel est réalisé le circuit de lecture. Ce substrat est traditionnellement recouvert, au niveau des structures actives, c'est à dire à l'aplomb des zones constituées de matériau bolométrique, d'une couche métallique réfléchissante. Cette dernière est destinée, de manière connue, à renvoyer le rayonnement non absorbé.

Les zones optiquement actives sont formées d'un pavage de membranes suspendues, comportant au dessus du circuit de lecture, un matériau bolométrique. Ces membranes sont supportées au moyen de structures essentiellement verticales, conductrices de l'électricité. Ces structures, réalisées à l'aide d'un matériau métallique, sont destinées en outre à amener les potentiels d'excitation générés par le circuit de lecture vers les parties conductrices, également dénommées électrodes, de la membrane de chaque détecteur bolométrique élémentaire, via des structures allongées, également conductrices électriquement, mais résistantes thermiquement.

Cette résistance thermique, dite aussi « isolation thermique » est destinée à permettre l'échauffement du bolomètre sous l'effet du rayonnement infra-rouge à détecter.

Le circuit de lecture applique de manière séquentielle un courant électrique qui traverse la structure suspendue. Ce courant circule à travers un matériau, dont la résistivité varie avec la température, qu'on appelle matériau bolomètre. Les matériaux les plus répandus pour cet usage sont l'oxyde de vanadium (formule générique $VO_x$) et le silicium amorphe (a-Si).

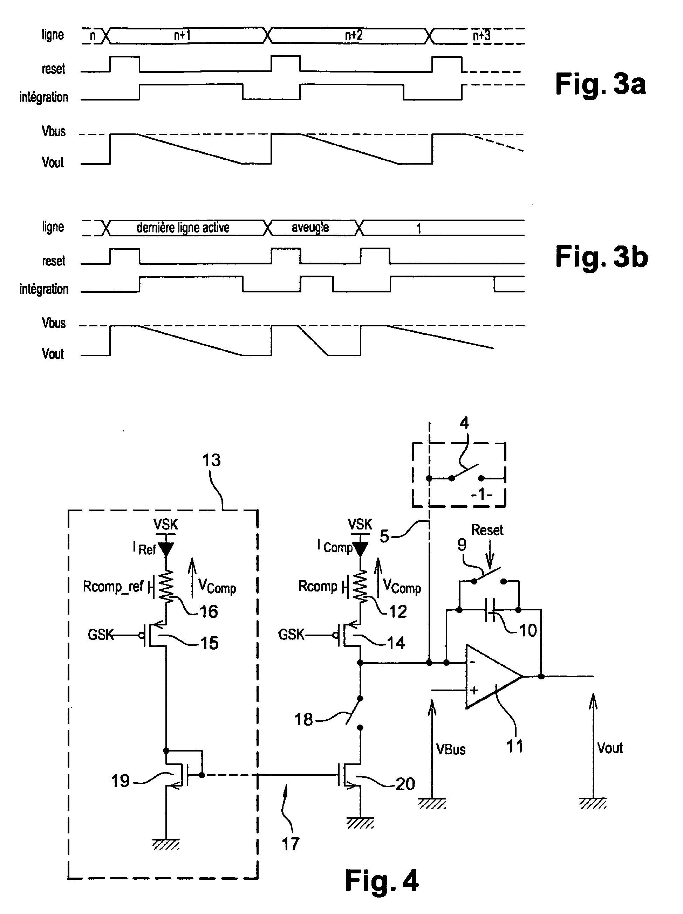

Cette matrice est pourvue d'une structure de compensation, destinée à dériver la majeure partie du courant électrique de mode commun traversant chacun des détecteurs bolométriques qui la constitue, et dont le principe est décrit en relation avec la figure 4. En l'espèce, chacune des colonnes de la matrice comporte une telle structure de compensation, qui constitue donc une ligne dite « aveugle », car constituée de bolomètres aveugles, ladite ligne étant lue par le circuit de lecture à l'instar des lignes actives.

Selon une caractéristique de l'invention, cette structure de compensation associée à chacune des colonnes comporte un bolomètre de compensation **12,** aveugle, de résistance $R_{comp}$, constitué par un seul ou plusieurs bolomètres élémentaires connectés ensemble. L'une des bornes de ladite résistance $R_{comp}$ est reliée à la masse. L'autre borne de ladite résistance est connectée au drain d'un transistor d'injection **14,** de telle sorte à imposer une tension $V_{comp}$ aux bornes de la résistance $R_{comp}$ du bolomètre de compensation **12** via une tension de grille (GSK) appliquée sur la grille dudit transistor, assurant ainsi la polarisation de ladite résistance. La source du transistor d'injection **14** est reliée à une structure d'intégration, constituée :

■ d'un amplificateur opérationnel **11** monté en intégrateur ;
■ d'une capacité d'intégration **10** Cint, connectée entre la sortie de l'amplificateur et l'entrée négative de l'amplificateur, sur laquelle on intègre le courant utile entrant par l'entrée négative dudit amplificateur ;
■ d'un interrupteur **9** dit de reset, connecté entre la sortie de l'amplificateur et l'entrée négative de l'amplificateur, assurant la remise à zéro des charges stockées sur la capacité d'intégration **10 ;**
■ d'une tension de référence Vbus, connectée à l'entrée positive de l'amplificateur **11,** fixant le point de fonctionnement de la structure.

Selon l'invention, la structure de compensation ainsi décrite est associée à une référence de courant unique pour toute la matrice, disposée à l'extérieur de ladite matrice. Cette référence de courant **13** est représentée dans les figures 4 à 7 dans un cadre en pointillé.

Elle comporte un bolomètre aveugle $R_{comp-réf}$ **16,** constamment polarisé à l'aide d'un transistor d'injection **15** piloté par la tension de grille GSK. Cette tension de grille est égale à celle des transistors d'injection **14** présents dans les structures de compensation de chacune des colonnes. Le courant de référence $I_{ref}$ est ensuite copié dans toutes les colonnes à l'aide d'un miroir de courant **17** commutable grâce à un interrupteur **18.**

Les miroirs de courant sont bien connus de l'homme du métier, de sorte qu'il n'y a pas lieu de les décrire ici plus en détail. Il convient simplement de rappeler qu'un tel miroir de courant est un circuit particulier, en l'espèce constitué de deux transistors **19, 20,** permettant de refléter le courant de référence $I_{ref}$ en un courant de sortie, idéalement égal, et en tout cas proportionnel au courant de référence, indépendamment de la charge connectée au courant de sortie, et en l'espèce à l'intégrateur décrit ci-dessus.

Le miroir de courant **17** est réalisé dans l'exemple décrit à l'aide de deux transistors NMOS **19, 20.** On prend naturellement soin de dimensionner lesdits transistors de telle sorte à minimiser la dispersion de tension de seuil des transistors, qui pourrait perturber la mesure de dispersion des résistances aveugles **12** en introduisant des erreurs de copies.

En l'espèce, un premier transistor de référence **19** a sa source à la masse du système. Son drain et sa grille sont connectés à la source du transistor d'injection **15** de la source de courant de référence.

Corollairement, le miroir de courant comporte un transistor **20** de copie par colonne. La grille de ce transistor est commune à la grille dudit premier transistor de référence **19,** et sa source est également à la masse. Son drain est connecté à l'interrupteur Lec **18** connectant le système de lecture des bolomètres aveugles **12** à l'entrée négative de l'amplificateur **11** précité.

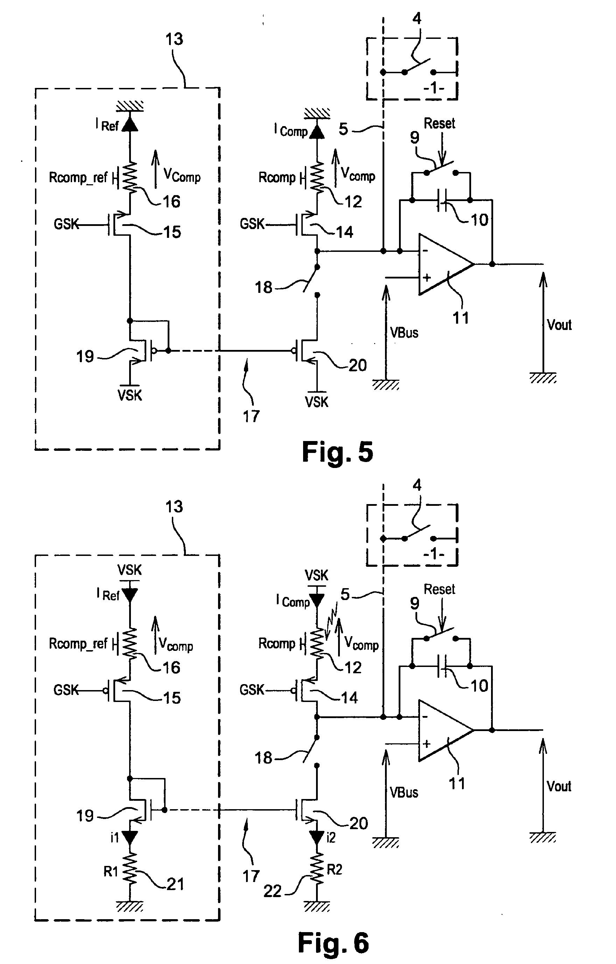

Dans l'exemple de la figure 4, les transistors **19, 20** du miroir de courant sont de type NMOS. La figure 5 illustre une autre forme de réalisation de l'invention, dans laquelle le miroir est désormais est réalisé à l'aide de transistors PMOS.

Lorsque l'on souhaite effectuer la lecture des bolomètres aveugles $R_{comp}$ **12** de la structure de compensation, on ferme dans un premier temps (comme pour la lecture de chaque ligne active) l'interrupteur Reset **9** afin de remettre à zéro les charges stockées dans la capacité d'intégration Cint **10.** Après quoi, on ouvre l'interrupteur Reset **9** et l'on ferme l'interrupteur **18** connectant le miroir de courant **17** à la structure de compensation sur toutes les colonnes simultanément.

Lorsque les résistances des bolomètres de compensation **12** ne sont pas dispersées, le courant traversant chaque structure de compensation est identique. Le courant de référence $I_{ref}$ est donc égal au courant circulant dans la structure de compensation de chaque colonne. Le courant d'intégration dans la capacité **10** est alors nul ; on a donc pour chaque colonne :

$$Vout = Vbus$$

En revanche, si la résistance des bolomètres aveugles **12** varie d'une colonne à l'autre, ce qui correspond techniquement au cas général, le courant $I_{comp}$ de la structure de compensation sera légèrement différent de celui du miroir de courant **17.**

On intègre donc pour chaque colonne un courant différentiel :

$$dI_{comp} = I_{comp} - I_{ref}$$

étant entendu que le courant $I_{comp}$ est légèrement différent d'une colonne à l'autre.

Le niveau continu de sortie NC pour la ligne de « signal » correspondant aux bolomètres aveugles de compensation, ci-après désigné par NC$_{comp}$ vérifie donc la relation décrite précédemment en relation avec l'état antérieur de la technique, dans le cas de la lecture des bolomètres actifs, à savoir :

$$NC_{comp} = Vbus - \frac{T\,\mathrm{int}}{C\,\mathrm{int}}\, dI_{comp}$$

La distribution des niveaux de sortie NC$_{comp}$ représente alors directement la distribution des résistances des bolomètres de compensation 12 (centrée autour du point de repos Vbus), et non plus la résistance absolue des bolomètres, puisque l'on a exactement soustrait la composante dite de mode commun.

La série de signaux NC$_{comp}$ est utilisable ensuite avec une grande précision dans l'objectif d'une correction algorithmique de chaque trame obtenue.

La structure de l'invention permet de réaliser une lecture plus précise de la dispersion des bolomètres aveugles de compensation. On a toujours :

$$\frac{\delta Vout}{\delta Rcomp} = \frac{T\,\mathrm{int}}{C\,\mathrm{int}} \times \frac{Vbolo}{Rcomp^2}$$

Mais dans le cas de l'invention, le temps d'intégration n'a aucunement besoin d'être réduit puisque le courant à intégrer est du même ordre de grandeur que lors de la lecture d'un bolomètre actif. L'application numérique qui suit a valeur d'exemple :

- ■ Cint = 6pF
- ■ Tint=60 μs
- ■ Vbolo=3 V
- ■ Rbolo=1.6 MΩ
- ■ dynamique de sortie = 3 V

$$\frac{\delta Vout}{\delta Rcomp} = 11.718e - 6V/\Omega$$

On a donc gagné dans ce cas un facteur 20 (le rapport des temps d'intégration utilisés) en précision par rapport à l'état antérieur de la technique. Ce gain de précision représente 4,3 bits de correction supplémentaire, fournissant au total l'équivalent de 7 bits de correction, niveau tout à fait satisfaisant pour envisager une correction algorithmique de qualité.

Une telle correction algorithmique consiste typiquement en l'application du processus suivant : si l'on considère une rétine d'imagerie de N colonnes et M lignes :

- ■ acquisition des N niveaux Vout[1 - N] des M lignes activées d'une trame (c'est à dire acquisition d'une image brute) ;
- ■ acquisition de N niveaux NC$_{comp}$[1 - N] selon la méthode précédemment décrite, correspondant à la lecture de la ligne de compensation ;
- ■ correction des N niveaux de sortie de chaque ligne appliquée successivement aux M lignes par un calcul du type :

$$V_{corr}[1-N] = V_{out}[1-N] - NC_{comp}[1-N] + \overline{NC_{comp}}$$

où $NC_{comp}$ représente la valeur moyenne des N valeurs NC$_{comp}$ [1 - N]

Ce calcul est bien entendu appliqué dans le domaine numérique après conversion analogique/numérique du flux de données V$_{out}$ et NC$_{comp}$.

Corollairement, la structure ainsi décrite permet de simplifier l'électronique de contrôle des capteurs bolométriques. En effet rien ne distingue plus, du point de vue de l'utilisateur, une ligne aveugle d'une ligne active. Il n'y a plus besoin de modifier le temps d'intégration spécifiquement pour la lecture de la ligne de bolomètres aveugles. Les signaux de contrôles sont identiques.

De plus, le cycle thermique n'est plus perturbé lors de l'adressage de la ligne de bolomètres aveugles, car ces derniers dissipent la même quantité d'énergie par effet joule lorsqu'ils sont connectés en mode « compensation » ou en mode « lecture ». Il n'y a plus de perturbations lors de la lecture des lignes qui suivent la lecture des bolomètres aveugles.

Enfin, l'invention permet de surmonter de manière radicale et élégante le problème de « gestion thermique » des bolomètres aveugles. En effet, lorsque les bolomètres aveugles **12** ne sont pas utilisés, c'est à dire lorsqu'ils ne sont pas connectés à l'intégrateur, il suffit de connecter le miroir de courant **17** de lecture en lieu et place de la source de courant fixe utilisée dans les circuits selon l'état antérieur de la technique. La source de courant de référence est selon l'invention, réalisée à l'aide d'un bolomètre aveugle de référence **16** $R_{comp-réf}$. Ce faisant, le courant de référence suit automatiquement, par construction, la température du circuit de lecture, de telle sorte qu'il constitue un courant de « substitution » idéal pour maintenir constante, ligne après ligne, la température des bolomètres de compensation, quels que soient le chronogramme de trame et la température du substrat.

En termes de circuiterie, on ferme l'interrupteur **18,** que l'on maintient fermé à tout instant, sauf lorsque l'un quelconque des interrupteurs de sélection de ligne **4** est fermé. De cette manière, le courant $I_{ref}$ recopié circule en permanence dans chaque bolomètre de compensation.

De manière connue, le miroir de courant introduit un bruit additionnel lors de la lecture des bolomètres aveugles. En effet, de par la mise en oeuvre des multiples structures MOS, le circuit réalisé selon la figure 4 peut présenter des limitations nées de la dispersion géométrique et technologique des multiples structures MOS qu'il met en oeuvre.

Afin de réduire le bruit temporel inhérent au miroir de courant, on peut mettre en oeuvre un montage plus évolué de la forme de réalisation de l'invention de la figure 4, tel que représenté au sein de la figure 6. En l'espèce, le montage proposé vise à « dégénérer » (terme consacré) le miroir de courant à l'aide de résistances R1 et R2, référencées **21** et **22** sur la figure 6, connectées au drain respectif de chacun des transistors **19** et **20**. Les résistances **21, 22** jouent le rôle de dégénérescence connue de l'homme du métier du miroir de courant **17.** La précision de recopie en courant est améliorée par la chute de tension ohmique aux bornes des résistances **21, 22.**

De ce fait, le bruit apporté par le miroir formé des transistors NMOS **19, 20** est réduit et la précision de recopie est supérieure.

Les résistances **21, 22** pourraient être remplacées par des transistors NMOS longs dans le même objectif.

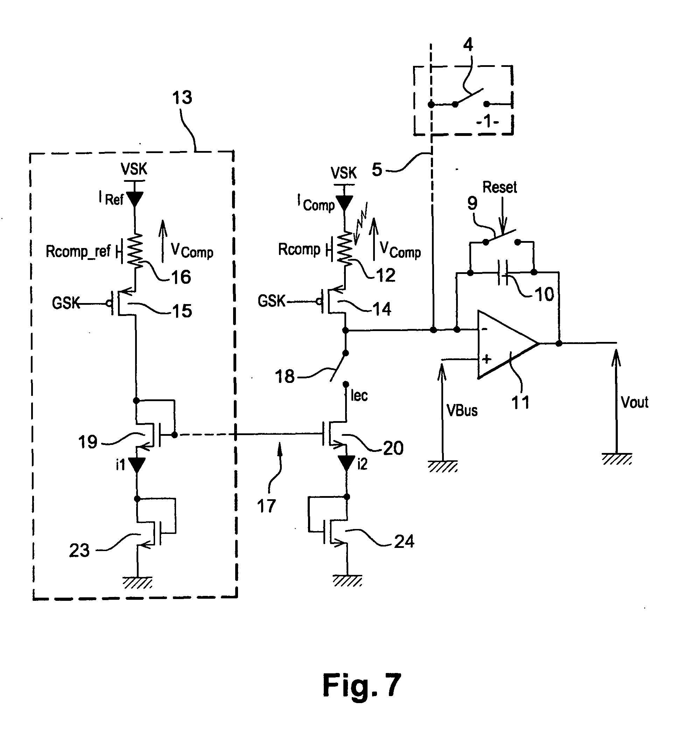

Selon une autre forme de réalisation avantageuse de l'invention, représentée au sein de la figure 7, on cherche à diminuer l'effet de dispersion des transistors mis en oeuvre, susceptible d'affecter la précision spatiale de recopie du miroir de courant.

A cet effet, on met en oeuvre un miroir dit « cascode », dans lequel on connecte le drain des deux transistors NMOS **19, 20** de la configuration de base illustrée sur la figure 4, respectivement à la source de deux transistors NMOS **23, 24,** dont le drain est à la masse.

On choisit naturellement les caractéristiques des transistors constitutifs du miroir de courant, de telle sorte à insensibiliser le circuit aux dispersions géométriques.

La structure « cascode » ainsi décrite permet de limiter l'impact des dispersions de tensions de seuil Vt sur la précision de copie. Cette réalisation est particulièrement avantageuse, car elle permet également d'apprécier, et donc de pouvoir corriger numériquement grace à une algorithmie adéquate, la dispersion du transistor PMOS **14** d'injection du bolomètre aveugle **12,** via le résultat de la lecture des bolomètres aveugles (les valeurs $NC_{comp}$). En effet, avec le système tel qu'il est représenté au sein de la figure 7, les dispersions de Vt du transistor NMOS **20** du miroir de courant **17** sont du même ordre de grandeur que les dispersions de Vt du transistor PMOS d'injection **14,** mais leur incidence sur la dispersion du courant $I_{comp}$ est bien inférieure à l'incidence des dispersions de Vt du transistor PMOS **14.**

Enfin, ce circuit permet pour la même raison de mesurer la dérive basse fréquence des résistances des bolomètres et des PMOS d'injection **12** liées au bruit en 1/f. Il devient donc possible de compenser de façon logicielle non seulement l'offset résiduel (le colonage fixe) mais également le bruit très basse fréquence provoquant l'apparition d'un colonage résiduel variable sur le signal observé, problématique dans le cadre des applications dépourvues d'obturateurs mécaniques, également dénommés sous l'expression anglo-saxonne *« shutter »*.

Ainsi, l'invention trouve tout particulièrement application dans le domaine des capteurs d'image à détection bolométrique, quelle que soit la bande optique de détection et le type de capteur bolométrique mis en oeuvre (notamment mais non limitativement à base de silicium amorphe (a-Si), d'oxydes de vanadium (Vox), de métaux (Ti)).

En outre, en raison de sa capacité d'adaptation à différentes températures de fonctionnement, l'invention s'applique aussi bien aux capteurs régulés thermiquement qu'aux capteurs opérant à température de plan focal variable, communément appelés « TECless ».

De plus, la capacité intrinsèque de faible bruit basses fréquences en colonne via une algorithmie de correction très précise, permet d'intégrer les détecteurs réalisés selon l'invention dans des caméras qui seraient dépourvues d'obturateur (ou selon l'expression anglo-saxonne de *« shutter »*).

Mais bien entendu, l'invention reste parfaitement compatible avec les caméras traditionnelles munies d'un tel obturateur. Ce faisant, on aboutit à une diminution sensible du coût de fabrication et d'intégration de telles caméras, ainsi qu'à une simplification de leur mise en oeuvre par l'utilisateur.

## Revendications

1. Dispositif de détection de rayonnement électromagnétique et notamment infrarouge comprenant une matrice de bolomètres élémentaires sensibles au rayonnement incident, dit « actifs » et une ligne additionnelle de bolomètres (12) essentiellement insensibles audit rayonnement, dits «aveugles », lesdits bolomètres actifs et aveugles étant formés au dessus d'un substrat, dans lequel est réalisé un circuit de lecture à adressage séquentiel de chacune des lignes de la matrice et de la ligne de bolomètres aveugles, chacun des bolomètres d'une même ligne étant polarisé simultanément, *caractérisé* :

    ■ en ce que le circuit de lecture comporte en outre une source de production d'un courant de référence ($I_{ref}$) à partir d'un bolomètre aveugle supplémentaire (16), également formé au dessus du substrat, et des moyens de copie dudit courant de référence ($I_{ref}$) dans chacune des colonnes de la matrice, constitués d'un miroir de courant (17) ;
    ■ en ce que chacune des colonnes de la matrice comporte une structure de compensation destinée à dériver la majeure partie du courant électrique de fond ou courant de mode commun, comportant un bolomètre aveugle (12) de ladite ligne additionnelle, associé à un intégrateur de courant (9, 10, 11), destiné à intégrer la différence entre le courant traversant le bolomètre actif de la ligne en cours de lecture et un courant de compensation émanant du bolomètre aveugle (12) ;
    ■ et, en ce que lors de la phase de formation du signal ou lecture de ladite ligne additionnelle, la copie du courant de référence ($I_{ref}$) est dérivée du courant émanant du bolomètre aveugle (12) par le biais d'un interrupteur (18).

2. Dispositif de détection de rayonnement électromagnétique et notamment infrarouge selon la revendication 1, *caractérisé* **en ce que** la structure de compensation comporte :

    ■ un bolomètre de compensation (12), de résistance $R_{comp}$;
    ■ une ligne d'alimentation (VSK) connectée à l'une des bornes de ladite résistance $R_{comp}$ ;
    ■ un transistor d'injection (14), connecté d'une part, à l'autre borne de ladite résistance $R_{comp}$, de manière à imposer un courant de compensation ($I_{comp}$) à travers ladite résistance $R_{comp}$, via une tension (GSK) sur sa grille, et d'autre part, à la borne négative de l'intégrateur (9, 10, 11).

3. Dispositif de détection de rayonnement électromagnétique et notamment infrarouge selon l'une des revendications 1 et 2, *caractérisé* **en ce que** la source de production du courant de référence ($I_{ref}$) est constituée :

    ■ du bolomètre aveugle supplémentaire (16) présentant une résistance $R_{comp-réf}$;
    ■ d'un transistor d'injection (15), connecté à l'une des bornes de ladite résistance $R_{comp-réf}$, et assurant la polarisation de ladite résistance ;
    ■ d'une ligne d'alimentation (VSK) connectée à l'autre borne de ladite résistance $R_{comp-réf}$ ;
    ■ d'un miroir de courant (17), connecté à l'autre borne du transistor.

4. Dispositif de détection de rayonnement électromagnétique et notamment infrarouge selon l'une des revendications 2 et 3, *caractérisé* **en ce que** les bolomètres aveugles (12) sont chacun constitués d'un ou plusieurs bolomètres aveugles élémentaires connectés ensemble, présentant globalement une résistance thermique négligeable par rapport au substrat.

5. Dispositif de détection de rayonnement électromagnétique et notamment infrarouge selon l'une des revendications 1 à 4, *caractérisé* **en ce que** le miroir de courant (17) comporte :

    ■ un premier transistor de référence (19) localisé près de la source de courant de référence, dont la source est à la masse du système, et dont le drain et la grille sont connectés à la source du transistor d'injection (15) de ladite source de courant de référence ;
    ■ un transistor de copie par colonne (20), dont la grille est commune (isopotentielle) à la grille dudit premier transistor de référence (19), dont la source est à la masse, et dont le drain est connecté à l'interrupteur (18) connectant le système de lecture des bolomètres aveugles à l'entrée de l'intégrateur.

**6.** Dispositif de détection de rayonnement électromagnétique et notamment infrarouge selon la revendication 5, *caractérisé* **en ce que** les transistors constitutifs du miroir de courant (17) peuvent être soit de type NMOS, soit de type PMOS.

**7.** Dispositif de détection de rayonnement électromagnétique et notamment infrarouge selon l'une des revendications 5 et 6, *caractérisé* **en ce que** l'on associe à chacun des deux transistors (19, 20) constitutifs du miroir de courant (17), un composant propre à induire une chute de tension ohmique.

**8.** Dispositif de détection de rayonnement électromagnétique et notamment infrarouge selon la revendication 7, *caractérisé* **en ce que** le composant assurant une chute de tension ohmique est constitué par une résistance (21, 22) ou un transistor « long ».

**9.** Dispositif de détection de rayonnement électromagnétique et notamment infrarouge selon l'une des revendications 5 et 6, *caractérisé* **en ce que** le miroir de courant mis en oeuvre est du type à « cascode », chacune des branches (19, 20) du miroir de courant (17) comportant un transistor supplémentaire (23, 24), dont le drain est connecté à la grille, et respectivement à la source des transistors (19, 20), et dont la source est à la masse du circuit.

**10.** Dispositif de détection de rayonnement électromagnétique et notamment infrarouge selon l'une des revendication 4 et 5, *caractérisé* **en ce que** l'interrupteur (18) de connexion du courant de référence $I_{ref}$ à l'entrée de l'intégrateur est maintenu fermé lorsque tous les interrupteurs de sélection (4) sont ouverts.

**11.** Système d'imagerie mettant en oeuvre un dispositif de détection infrarouge selon l'une des revendications 5 à 9, intégrant une algorithmie corrigeant les signaux de sortie de chaque ligne de chaque trame en fonction d'un signal « ligne » particulier, obtenu par la fermeture de l'interrupteur (18) connectant ledit courant de référence $I_{ref}$ à l'entrée de l'intégrateur lors de la lecture de la ligne de bolomètres aveugles.

**Claims**

**1.** A device for detecting electromagnetic radiation, especially infrared radiation, comprising an array of elementary bolometers which are sensitive to the incident radiation and are referred to as "active" bolometers and an additional row of bolometers (12) which are substantially insensitive to said radiation and are referred to as "blind", said active and blind bolometers being formed on a substrate in which a read circuit is produced for sequential addressing of each of the rows of the array and the row of blind bolometers, each of the bolometers in the same row being biased simultaneously, *characterized*:

■ in that the read circuit also comprises a source for producing a reference current ($I_{ref}$) on the basis of an additional blind bolometer (16) which is also formed on the substrate and means of copying said reference current ($I_{ref}$) to each of the columns of the array consisting of a current mirror (17);
■ in that each of the columns of the array comprises a compensation structure designed to shunt most of the background electric current or common mode current comprising a blind bolometer (12) of said additional row, associated with a current integrator (9, 10, 11) designed to integrate the difference between the current flowing through the active bolometer of the row which is currently being read and a compensation current output by blind bolometer (12);
■ and in that, during the phase when the signal is formed or said additional row is read, a copy of reference current ($I_{ref}$) is derived from the current output by blind bolometer (12) via switch (18).

**2.** A device for detecting electromagnetic radiation, especially infrared radiation, as claimed in claim 1, *characterized* **in that** the compensation structure comprises:

■ a compensation bolometer (12) having a resistance $R_{comp}$;
■ a power supply line (VSK) connected to one of the terminals of said resistance $R_{comp}$;
■ a charge injection transistor (14) connected, firstly, to the other terminal of said resistance so as to impose a compensation current ($I_{comp}$) through said resistance $R_{comp}$ by means of a voltage (GSK) on its gate and connected, secondly, to the negative terminal of the integrator (9, 10, 11).

3. A device for detecting electromagnetic radiation, especially infrared radiation, as claimed in any of claims 1 and 2, *characterized* in that the source for producing reference current ($I_{ref}$) consists of:

   ■ the additional blind bolometer (16) having a resistance $R_{comp-réf}$,
   ■ a charge injection transistor (15) connected to one of the terminals of said resistance $R_{comp-réf}$ and which ensures biasing of said resistance;
   ■ a power supply line (VSK) connected to the other terminal of said resistance $R_{comp-ref}$;
   ■ a current mirror (17) connected to the other terminal of the transistor.

4. A device for detecting electromagnetic radiation, especially infrared radiation, as claimed in any of claims 2 and 3, *characterized* in that blind bolometers (12) each consist of one or more elementary blind bolometers connected to each other and collectively having a negligible thermal resistance relative to the substrate.

5. A device for detecting electromagnetic radiation, especially infrared radiation, as claimed in any of claims 1 to 4, *characterized* in that current mirror (17) comprises:

   ■ a first reference transistor (19) located close to the source of reference current, the source of which is connected to the system ground and the drain and gate of which are connected to the source of charge injection transistor (15) of said reference current source;
   ■ a column copying transistor (20), the gate of which is common (isopotential) with the gate of said first reference transistor (19), the source of which is grounded and the drain of which is connected to switch (18) which connects the system for reading the blind bolometers to the input of the integrator.

6. A device for detecting electromagnetic radiation, especially infrared radiation, as claimed in claim 5, *characterized* in that the transistors which constitute current mirror (17) can be of the NMOS type or of the PMOS type.

7. A device for detecting electromagnetic radiation, especially infrared radiation as claimed in any of claims 5 and 6, *characterized* in that one associates a component suitable for producing an ohmic voltage drop with each of the two transistors (19, 20) which constitute current mirror (17).

8. A device for detecting electromagnetic radiation, especially infrared radiation, as claimed in claim 7, *characterized* in that the component which ensures an ohmic voltage drop consists of a resistance (21, 22) or a long transistor.

9. A device for detecting electromagnetic radiation, especially infrared radiation, as claimed in any of claims 5 and 6, *characterized* in that the current mirror used is of the cascode type, with each of the arms (19, 20) of current mirror (17) comprising an additional transistor (23, 24), the drain of which is connected to the gate and to the source of transistors (19, 20) respectively, and the source of which is connected to the circuit ground.

10. A device for detecting electromagnetic radiation, especially infrared radiation, as claimed in any of claims 4 and 5, *characterized* in that switch (18) which connects reference current $I_{ref}$ to the input of the integrator is kept closed when all the select switches (4) are open.

11. An imaging system which uses a device for detecting infrared radiation as claimed in any of claims 5 to 9 and includes an algorithmic function to correct the output signals of every row of every frame as a function of the particular "row" signal obtained by closing switch (18) which connects said reference current $I_{ref}$ to the input of the integrator when reading the row of blind bolometers.

**Patentansprüche**

1. Vorrichtung zum Erfassen von elektromagnetischer Strahlung, insbesondere Infrarotstrahlung, umfassend eine Matrix von sogenannten aktiven Einzelbolometern, die für die einfallende Strahlung empfindlich sind, und eine zusätzliche Reihe von sogenannten blinden Bolometern (12), die für diese Strahlung im Wesentlichen unempfindlich sind, wobei die aktiven und blinden Bolometer über einem Substrat gebildet sind, in dem ein Lesekreis mit sequenzieller Adressierung jeder der Reihen der Matrix und der Reihe von blinden Bolometern gebildet ist, wobei jedes der Bolometer ein und derselben Reihe gleichzeitig polarisiert ist, **dadurch gekennzeichnet,**

   - **dass** der Lesekreis außerdem eine Quelle zur Erzeugung eines Bezugsstroms ($I_{ref}$) aus einem zusätzlichen blinden Bolometer (16), das ebenfalls über dem Substrat gebildet ist, und Mittel zum Kopieren dieses Bezugsstroms ($I_{ref}$) in jeder der Spalten der Matrix umfasst, die aus einem Stromspiegel (17) bestehen;

- **dass** jede der Spalten der Matrix eine Ausgleichsstruktur umfasst, die dazu bestimmt ist, den größten Teil des elektrischen Grundstroms oder Gleichtaktstroms abzuleiten, und ein blindes Bolometer (12) der zusätzlichen Reihe umfasst, das einem Stromintegrator (9, 10, 11) zugeordnet ist, der dazu bestimmt ist, die Differenz zwischen dem Strom, der das in Lesung begriffene aktive Bolometer der Reihe durchfließt, und einem von dem blinden Bolometer (12) ausgehenden Ausgleichsstrom zu integrieren;

- und **dass** die Kopie des Bezugsstroms ($I_{ref}$) in der Phase der Signalbildung oder Lesung der zusätzlichen Reihe von dem von dem blinden Bolometer (12) ausgehenden Strom über einen Schalter (18) abgeleitet wird.

2. Vorrichtung zum Erfassen von elektromagnetischer Strahlung, insbesondere Infrarotstrahlung nach Anspruch 1, **dadurch gekennzeichnet, dass** die Ausgleichsstruktur umfasst:

- ein Ausgleichsbolometer (12) mit dem Widerstand $R_{comp}$;
- eine Versorgungsleitung (VSK), die an einen der Anschlüsse des Widerstands $R_{comp}$ angeschlossen ist;
- einen Injektionstransistor (14), der einerseits an den anderen Anschluss des Widerstands $R_{comp}$ angeschlossen ist, so dass ein Ausgleichsstrom ($I_{comp}$) im Widerstand $R_{comp}$ über eine Spannung (GSK) an seinem Gitter auferlegt wird, und andererseits an den negativen Anschluss des Integrators (9, 10, 11) .

3. Vorrichtung zum Erfassen von elektromagnetischer Strahlung, insbesondere Infrarotstrahlung nach einem der Ansprüche 1 und 2, **dadurch gekennzeichnet, dass** die Quelle zur Erzeugung des Bezugsstroms ($I_{ref}$) besteht aus:

- dem zusätzlichen blinden Bolometer (16) mit einem Widerstand $R_{comp-ref}$;
- einem Injektionstransistor (15), der an einen der Anschlüsse des Widerstands $R_{comp-ref}$ angeschlossen ist und die Polarisierung dieses Widerstands gewährleistet;
- einer Versorgungsleitung (VSK), die an den anderen Anschluss des Widerstands $R_{comp-ref}$ angeschlossen ist;
- einem Stromspiegel (17), der an den anderen Anschluss des Transistors angeschlossen ist.

4. Vorrichtung zum Erfassen von elektromagnetischer Strahlung, insbesondere Infrarotstrahlung nach einem der Ansprüche 2 und 3, **dadurch gekennzeichnet, dass** die blinden Bolometer (12) jeweils aus einem oder mehreren zusammengeschalteten blinden Einzelbolometern bestehen, die insgesamt einen gegenüber dem Substrat vernachlässigbaren Wärmewiderstand aufweisen.

5. Vorrichtung zum Erfassen von elektromagnetischer Strahlung, insbesondere Infrarotstrahlung nach einem der Ansprüche 1 bis 4, **dadurch gekennzeichnet, dass** der Stromspiegel (17) umfasst:

- einen ersten bei der Bezugsstromquelle angeordneten Bezugstransistor (19), dessen Source mit der Masse des Systems verbunden ist, und dessen Drain und Gitter an die Source des Injektionstransistors (15) der Bezugsstromquelle angeschlossen sind;
- einen Kopietransistor (20) pro Spalte, dessen Gitter dem Gitter des ersten Bezugstransistors (19) gemeinsam (isopotentiell) ist, dessen Source mit der Masse verbunden ist und dessen Drain mit dem Schalter (18) verbunden ist, der das System zum Lesen der blinden Bolometer mit dem Eingang des Integrators verbindet.

6. Vorrichtung zum Erfassen von elektromagnetischer Strahlung, insbesondere Infrarotstrahlung nach Anspruch 5, **dadurch gekennzeichnet, dass** die den Stromspiegel (17) bildenden Transistoren vom Typ NMOS oder vom Typ PMOS sein können.

7. Vorrichtung zum Erfassen von elektromagnetischer Strahlung, insbesondere Infrarotstrahlung nach einem der Ansprüche 5 und 6, **dadurch gekennzeichnet, dass** man jedem der beiden den Stromspiegel (17) bildenden Transistoren (19, 20) ein Bauelement zuordnet, das einen Ohmschen Spannungsabfall induzieren kann.

8. Vorrichtung zum Erfassen von elektromagnetischer Strahlung, insbesondere Infrarotstrahlung nach Anspruch 7, **dadurch gekennzeichnet, dass** das einen Ohmschen Spannungsabfall induzierende Bauelement aus einem Widerstand (21, 22) oder einem "langen" Transistor besteht.

9. Vorrichtung zum Erfassen von elektromagnetischer Strahlung, insbesondere Infrarotstrahlung nach einem der Ansprüche 5 und 6, **dadurch gekennzeichnet, dass** der verwendete Stromspiegel vom Typ "Kaskode" ist, wobei jeder der Zweige (19, 20) des Stromspiegels (17) einen zusätzlichen Transistor (23, 24) umfasst, dessen Drain mit dem Gitter bzw. mit der Source der Transistoren (19, 20) verbunden ist und dessen Source mit der Masse der Schaltung verbunden ist.

10. Vorrichtung zum Erfassen von elektromagnetischer Strahlung, insbesondere Infrarotstrahlung nach einem der Ansprüche 4 und 5, **dadurch gekennzeichnet, dass** der Schalter (18) zur Verbindung des Bezugsstroms I$_{ref}$ mit dem Eingang des Integrators geschlossen gehalten ist, wenn alle Wahlschalter (4) offen sind.

11. Bildgebungssystem, das eine Vorrichtung zur Infraroterfassung nach einem der Ansprüche 5 bis 9 benutzt, in das ein Algorithmus integriert ist, der die Ausgangssignale jeder Reihe jedes Teilbilds in Abhängigkeit von einem besonderen "Reihen"-Signal korrigiert, das durch die Schließung des Schalters (18) erhalten wird, der den Bezugsstrom I$_{ref}$ mit dem Eingang des Integrators bei der Lesung der Reihe von blinden Bolometern verbindet.

**Fig. 1**

**Fig. 2**

**Fig. 3a**

**Fig. 3b**

**Fig. 4**

**Fig. 5**

**Fig. 6**

**Fig. 7**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **E. MOTTIN et al.** Infrared Technology and Applications XXVIII. *SPIE,* vol. 4820
- **B. FIEQUE et al.** Optical Systems Design Conference. *SPIE,* 5251
- **C. TROUILLEAU et al.** Optical Systems Design Conference. *SPIE,* 5251-16